# EUROPÄISCHE PATENTSCHRIFT

(11) **EP 1 623 912 B1**
(45) Veröffentlichungstag und Bekanntmachung des Hinweises auf die Patenterteilung: **14.01.2009**
(21) Anmeldenummer: 05105073.0
(22) Anmeldetag: 09.06.2005
(51) Int. Cl.: B62D 15/02

(54) **Verfahren zur Ausgabe von Fahrerinformationen für eine Einparkhilfe**
Method for out driver information data for a parking assistance system
Procédés pour l'affichage des information d'assistance au parking pour un conducteur

(30) Priorität: 04.08.2004 DE 102004037734
(43) Veröffentlichungstag der Anmeldung: 08.02.2006
(73) Patentinhaber: ROBERT BOSCH GMBH, 70442 Stuttgart (DE)
(72) Erfinder: Lee, Wei-Chia, 71229, Leonberg (DE)

(56) Entgegenhaltungen:
- EP-A- 1 484 234
- DE-A1- 19 646 559
- FR-A- 2 728 859

## Beschreibung

Die Erfindung betrifft ein Verfahren zur Ausgabe von Fahrerinformationen für eine Einparkhilfe.

Fahrerassistenzsysteme unterstützen den Fahrer beim Rangieren und Ein- und Ausparken mittels Abstandsensoren, die die jeweiligen Abstände zu Hindernissen, z. B. parkenden Fahrzeugen, ermitteln. Aus den ermittelten Abstandssignalen und ggf. der ermittelten Änderung der Fahrzeugposition bzw. des Fahrzustandes werden dem Fahrer z. B. Lenkwinkelsignale zur Anzeige eines erforderlichen Lenkeinschlages ausgegeben.

Die Ausgabe der Fahrerinformationen erfolgt hierbei z. T. durch optische Anzeigesysteme, bei denen auf einer Anzeigeeinrichtung im Cockpit des Fahrzeuges der erforderliche Lenkwinkeleinschlag bzw. eine Richtungsangabe - links oder rechts - angezeigt wird. Die Umsetzung derartiger Lenkwinkelsignale durch den Fahrer ist jedoch oftmals umständlich. Insbesondere kann dem Fahrer in der Regel die Größe des erforderlichen Lenkwinkeleinschlags nur schlecht dargestellt werden, so dass er das Lenkrad entweder mit zeitlicher Verzögerung einschlägt oder um den erforderlichen Lenkeinschlag hinauslenkt, so dass ein dynamischer Einparkvorgang oftmals schwierig und zeitaufwendig ist. Die auf den Anzeigeeinrichtungen dargestellten Anweisungen und Diagramme können zudem oftmals der jeweiligen Fahrsituation nur schwer intuitiv zugeordnet werden.

Bei automatischen Parksystemen erfolgt eine vollautomatische Steuerung des Fahrzeuges, d. h. das Fahrzeug wird selbsttätig gelenkt, angetrieben und gebremst. Derartige automatische Einparksysteme erfordern jedoch eine aktive Lenkung und sind zudem aus Produkthaftungsgründen bedenklich.

Ein Verfahren gemäß dem Oberbegriff von Anspruch 1 ist aus der FR 2728859 A bekannt.

Das erfindungsgemäße Verfahren zur Ausgabe von Fahrerinformationen bietet demgegenüber einige Vorteile. Erfmdungsgemäß wird eine Trajektorie mit Umlenkpunkten von einer Start- zu einer Zielposition ermittelt, aus der die jeweils aktuellen Soll-Lenkwinkel ermittelt werden können. Dem Fahrer wird der Einparkvorgang auf einer Anzeigeeinrichtung mit zwei unterschiedlichen Anzeigen, nämlich einer Verlaufsanzeige und einer Lenkwinkel-Verfolgungsanzeige, visualisiert.

In der Verlaufsanzeige kann der Fahrer jeweils den Fortschritt des Einparkvorganges erkennen, d.h., wo sich das Fahrzeug auf der Trajektorie befindet und wann und in welche Richtung er während des Fahrens lenken muss. Hierzu wird ein Verlaufszeiger abgebildet, der einen Statusbalken darstellt, der direkt den örtlichen Verlauf auf der Trajektorie angibt und eine direkte und unkomplizierte intuitive Zuordnung ermöglicht, so dass der Fahrer sich auf den bevorstehenden Lenkrichtungswechsel vorbereiten kann. Die Verlaufsanzeige ist vorteilhafterweise als geradliniges lineares Diagramm oder als S-Kurven-Diagramm ausgebildet. Die Umlenkpunkte zur Änderung des Lenkeinschlags werden durch entsprechende Umlenkzeiger optisch dargestellt; ergänzend kann auch eine akustische Ausgabe erfolgen.

In der Lenkwinkel-Verfolgungsanzeige kann der Fahrer direkt einen den Ist-Lenkwinkel wiedergebenden Ist-Lenkwinkelzeiger mit einem den Soll-Lenkwinkel wiedergebenden Soll-Lenkwinkelzeiger in Übereinstimmung bringen. Diese Darstellung kann insbesondere durch rotierende Zeiger erfolgen, die konzentrisch um einen gemeinsamen Mittelpunkt rotieren. Hierbei können die beiden Zeiger von dem Fahrer z. B. übereinander in Deckung gebracht werden oder zwei Zeigersymbole, z. B. Dreiecke oder Pfeilspitzen, zueinander geführt werden. Hierdurch wird eine direkte Analogie zur Lenkbewegung des Fahrers hergestellt, die eine unmittelbare intuitive Zuordnung ermöglicht. Alternativ zu einer konzentrischen, kreisbogenförmigen Bewegung kann auch z.B. eine Schiebebewegung in einem linearen Register erfolgen.

Erfindungsgemäß werden sowohl der Soll-Lenkwinkelzeiger als auch der Ist-Lenkwinkelzeiger gegenüber einer Mittelstellung verstellt, die die Geradeausfahrt anzeigt, so dass der Fahrer in jeder Position und bei jedem Lenkwinkeleinschlag den neutralen Lenkwinkeleinschlag für die Geradeausfahrt direkt erkennt und die Räder nach Beendigung des Einparkvorganges wieder in Geradeausfahrt einstellen kann.

Indem der Fahrer beim Einparken lediglich durch eine jeweilige Anpassung des Lenkeinschlages den Ist-Lenkwinkelzeiger mit dem Soll-Lenkwinkelzeiger in Übereinstimmung bringt, d.h. den Soll-Lenkwinkelzeiger mit dem Ist-Lenkwinkelzeiger verfolgt, kann er ohne Kenntnis seiner genauen Position in der Trajektorie eine sicheren Einparkvorgang erreichen. Sobald auf der Verlaufsanzeige ein Umlenkpunkt erreicht wird, bewegt sich der Soll-Lenkwinkelzeiger auf der Lenkwinkel-Verfolgungsanzeige in die andere Richtung, so dass der Fahrer nun entsprechend lenken muss, um den Ist-Lenkwinkelzeiger wiederum mit dem Soll-Lenkwinkelzeiger in Übereinstimmung zu bringen.

Erfindungsgemäß kann insbesondere ein Einparkvorgang in eine seitliche Parklücke - sowohl rechts als auch, z. B. in einer Einbahnstraße, links - erfolgen. Hierbei fährt der Fahrer vorteilhafterweise zunächst an der Parklücke vorbei, um eine genaue Vermessung der Parklücke durch seine z. B. auf Ultraschallbasis oder auch auf Radarbasis oder optischer Raumerkennung beruhenden Abstandssensoren zu ermöglichen.

Es wird ein dynamischer Einparkvorgang erreicht, bei dem der Fahrer sein Fahrzeug nicht stoppen muss. Hierzu kann der angezeigten Soll-Lenkwinkel nach den Umkehrpunkten kontinuierlich vergrößert werden, d. h., dass der Soll-Lenkwinkelzeiger nach Erreichen eines Umlenkpunktes allmählich in die andere Richtung geführt wird und somit einen dynamischen Einparkvorgang mit allmählicher Nachführung des Lenkrades ohne Stoppen ermöglicht.

Erfindungsgemäß ist es nicht erforderlich, dass das Fahrzeug die ermittelte Trajektorie tatsächlich genau einhält; die aktuelle tatsächliche Position kann direkt einer Position auf der Trajektorie zugeordnet werden. Falls die Abweichung von der Trajektorie zu groß wird, kann ein Fehlersignal ausgegeben werden. Eine Neuberechnung der Trajektorie kann z. B. bei jedem Stopp des Fahrzeuges erfolgen.

Die Erfindung wird im Folgenden anhand der beiliegenden Zeichnungen an einigen Ausführungsformen näher erläutert. Es zeigen:
Fig. 1 eine Straßenszene mit einer Einparksituation eines Fahrzeuges;
Figur 2 ein Blockdiagramm einer erfindungsgemäßen Schaltungsanordnung;
Fig. 3a bis f die Darstellung des Einparkvorganges auf einer erfindungsgemäßen Anzeigeeinrichtung mit einer Lenkwinkel-Verfolgungsanzeige und einer Fahrweg-Verlaufsanzeige;
Fig. 4: eine weitere erfindungsgemäße Anzeigeeinrichtung mit kreisförmiger Lenkwinkel-Verfolgungsanzeige und horizontaler Fahrweg-Verlaufsanzeige;
Fig. 5: eine weitere Ausführungsform einer Lenkwinkel-Verfolgungsanzeige.

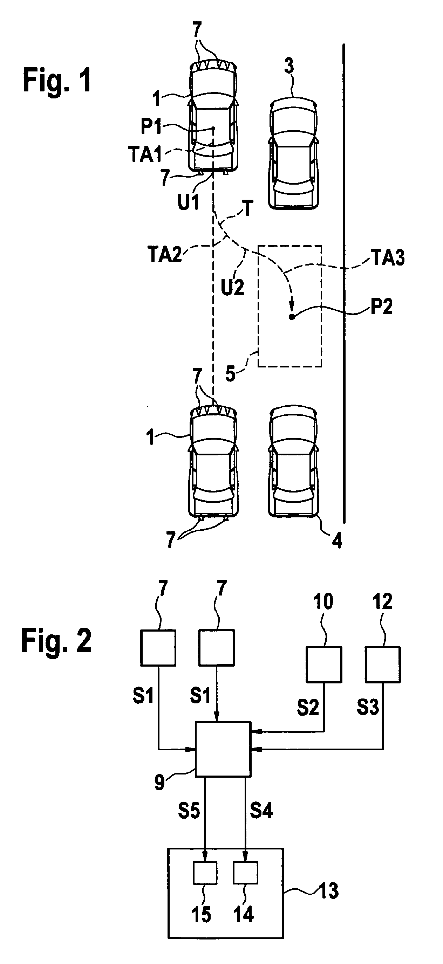

Der Fahrer eines Fahrzeug 1 will gemäß der Straßenszene der Fig. 1 in eine zwischen zwei parkenden Fahrzeugen 3 und 4 verbleibende Parklücke 5 einparken. Das Fahrzeug 1 weist Abstandssensoren 7 zum Ermitteln von Abständen zu den Fahrzeugen 3, 4 und ggf. weiteren, sich während des Einparkvorganges nähernden Objekten, z. B. weiteren Fahrzeugen, Fußgängern oder Radfahrern auf. Die Abstandssensoren 7 können insbesondere Ultraschallsensoren sein; grundsätzlich können jedoch auch z. B. Radarsensoren oder optische Sensoren zur Messung der Abstände vorgesehen sein. Die Abstandssensoren 7 geben gemäß Fig. 2 Abstandssignale S1 an eine Steuereinrichtung 9 aus. Weiterhin gibt ein Lenkwinkelsensor 10 Lenkwinkelsignale S2 an die Steuereinrichtung 9 aus; weiterhin werden von einem Raddrehzahlsensor 12 Raddrehzahlsignale S3 an die Steuereinrichtung 9 ausgegeben. Der Raddrehzahlsensor 12 ist vorzugsweise ein Pulszähler, der die Drehrate der jeweiligen Räder erfasst, wobei die Raddrehzahlsignale S3 in an sich bekannter Weise auch für Fahrdynamikregelungen, z. B. das ABS, herangezogen werden.

Zum Einparken in die Parklücke 5 fährt der Fahrer mit dem Fahrzeug 1 zunächst gemäß Fig. 1 an der Parklücke 5 vorbei und stoppt das Fahrzeug 1 in der Startposition P1 für den nachfolgenden Einparkvorgang. Während des Vorbeifahrens an der Parklücke 5 ermitteln die Abstandssensoren 7 Abstandssignale S1 und geben diese an die Steuereinrichtung 9 weiter. Die Steuereinrichtung 9 kann die Abstandssignale S1 den jeweiligen Positionen des Fahrzeugs während dieser Fahrt zuordnen, indem die Raddrehzahlsignale S3 zeitlich integriert werden.

Die Steuereinrichtung 9 ermittelt aus den Signalen S1, S3 sowie ggf. S2 eine in Fig. 1 gezeigte Trajektorie T für einen Einparkvorgang von der Startposition P1 in eine Zielposition P2 in der Parklücke 5. Die Trajektorie T wird idealerweise aus aufeinander folgenden Trajektorienabschnitten TA1, TA2, TA3 mit jeweils gleichgerichtetem Lenkeinschlag gebildet; in dem gezeigten Beispiel bei Rückwärtsfahrt ist ein erster gradliniger Trajektorienabschnitt TA1 bis zu dem ersten Umlenkpunkt U1 für einen Rechtseinschlag, ein nachfolgender zweiter Trajektorienabschnitt TA2 bis zu einem zweiten Umlenkpunkt U2 für einen Linkseinschlag und ein nachfolgender dritter Trajektorienabschnitt TA3, durch den die geplante Endposition P2 in der Parklücke 5 erreicht wird, vorgesehen.

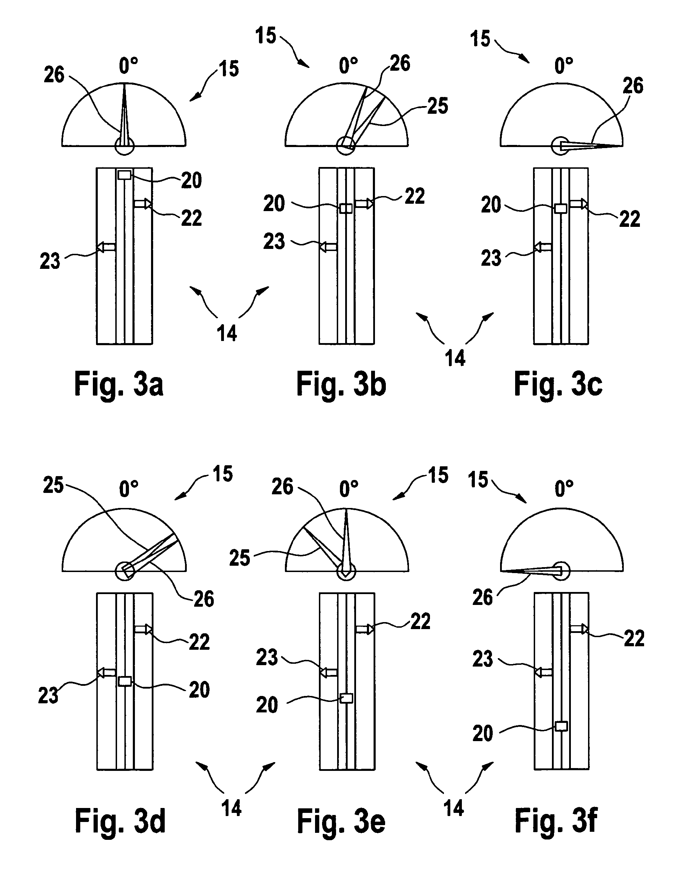

Zur Führung des Fahrzeuges 1 ermittelt die Steuereinrichtung 9 während des Einparkvorganges fortlaufend Verlaufs-Anzeigesignale S4, die sie an eine Verlaufsanzeige 14 ausgibt, und Lenkwinke-Anzeigesignale S5, die sie an eine Lenkwinkel-Verfolgungsanzeige 15 ausgibt, wie in den Figuren 3 bis 5 beispielhaft näher erläutert wird.

Die Figuren 3a bis f zeigen eine erfindungsgemäße Anzeigeeinrichtung 13 mit der Verlaufsanzeige 14 und der Lenkwinkel-Verfolgungsanzeige 15 während des Einparkvorganges entlang der Trajektorie T. Die Verlaufsanzeige 14 weist einen Verlaufszeiger 20 und zwei Umlenkzeiger 22, 23 auf. Der Verlaufszeiger 20 wandert während des Einparkvorganges von dem der Starposition P1 entsprechenden oberen Ende der Skala der Verlaufsanzeige 14 zu einem der Zielposition P2 entsprechenden unteren Punkt, wobei die Positionen des Verlaufszeigers 20 dem Fortschritt auf der Trajektorie T entsprechen. Hierbei gelangt der Verlaufszeiger 20 nacheinander an die Umlenkzeiger 22 und 23, die den Umlenkpunkten U1 und U2 der Trajektorie T entsprechen, wodurch dem Fahrer die jeweilige Änderung des Lenkwinkeleinschlages angezeigt wird. In der Lenkwinkel-Verfolgungsanzeige 15 ist ein Soll-Lenkwinkelzeiger 25 zur Darstellung des erforderlichen Soll-Lenkwinkeleinschlages und ein Ist-Lenkwinkelzeiger 26 zur Darstellung des aus den Lenkwinkelsignalen S2 ermittelten Ist-Lenkwinkeleinschlages vorgesehen. Der Fahrer muss hierbei den jeweils angezeigten Ist-Lenkwinkelzeiger 26 dem Soll-Lenkwinkelzeiger 25 nachführen, um dem Trajektorienverlauf entsprechend zu folgen. Bei der Darstellung ist der gesamte Lenkwinkelbereich entsprechend skaliert; bei der Ausführungsform der Figur 3a bis f erfolgt eine Darstellung auf einem Halbkreis, d. h. 180°, so dass der tatsächliche Lenkradwinkelbereich von mehreren Umdrehungen bzw. der Radlenkwinkelbereich von weniger als 180° entsprechend zu skalieren sind.

Gemäß Fig. 3a beginnt der Fahrer den Einparkvorgang entlang der Trajektorie T in der Startposition P1, so dass der Verlaufszeiger 20 am oberen Ende der Verlaufsanzeige 14 ist. Da in dem ersten Trajektorienabschnitt TA1 zunächst eine Geradeausfahrt vorgesehen ist, befindet sich der Soll-Lenkwinkelzeiger 25 in der Lenkwinkel-Verfolgungsanzeige 15 in einer mittleren, neutralen (0°-) Position. Da das Lenkrad bzw. die Räder des Fahrzeuges 1 nicht eingeschlagen sind, ist auch der Ist-Lenkwinkelzeiger 26 in der mittleren neutralen Position, so dass der Fahrer zunächst ohne Betätigung des Lenkrades rückwärts fahren kann, bis gemäß Fig. 3b in dem ersten Umlenkpunkt U1 der Verlaufszeiger 20 zu dem ersten Umlenkzeiger 22 gelangt. Hier wird in der Lenkwinkel-Verfolgungsanzeige 15 der Soll-Lenkwinkelzeiger 25 auf den der Krümmung des zweiten Trajektorienabschnittes TA2 entsprechenden Sollwert eingestellt und erscheint dementsprechend in der Lenkwinkel-Verfolgungsanzeige 15 auf einer rechten Position. Der Fahrer muss entsprechend das Lenkrad nach rechts einschlagen, bis der Ist-Lenkwinkelzeiger 26 den Soll-Lenkwinkelzeiger 25 erreicht. Während des Lenkeinschlages kann der Fahrer entsprechend weiter zurücksetzen, so dass der Verlaufszeiger 20 in der Verlaufsanzeige 14 weiter nach unten verschoben wird. Hierbei bewegt sich der Soll-Lenkwinkelzeiger 25 weiter nach rechts, so dass der Fahrer entsprechend das Lenkrad weiter einschlagen muss.

Gemäß Fig. 3c sind Soll- und Ist-Vorgabe identisch; der Fahrer setzt weiter nach hinten, bis er gemäß Fig. 3d auf der Trajektorie T den zweiten Umlenkpunkt U2 und entsprechend der Verlaufszeiger 20 in der Verlaufsanzeige 14 den zweiten Umlenkzeiger 23 erreicht. Der Soll-Lenkwinkelzeiger 25 wandert gemäß Fig. 3d,e,f bei der weiteren Rückwärtsfahrt entsprechend nach links, so dass der Fahrer durch entsprechendes Einschlagen des Lenkrads nach links wiederum den Ist-Lenkwinkelzeiger 26 dem Soll-Lenkwinkelzeiger 25 nachführen kann, bis er in Fig. 3f die beiden Zeiger zur Deckung bringt. Durch weiteres Rückwärtssetzen gelangt der Fahrer hierbei auf der Trajektorie T zum Zielpunkt P2. Auf Wunsch kann er gegenlenken und die Räder gerade stellen, indem er auf der Lenkwinkel-Verfolgungsanzeige 15 den Ist-Lenkwinkelzeiger 26 wieder in die neutrale, mittlere Position bringt. Anschließend kann er ein Stück gerade nach vorne fahren, so dass das Fahrzeug ggf. in der Mitte der Parklücke zum Stehen kommt.

Die Zeiger 25, 26 können in unterschiedlichen Farben, z. B. Rot für den Soll-Lenkwinkelzeiger 25 und Blau oder Gelb für den Ist-Lenkwinkelzeiger 26, dargestellt werden.

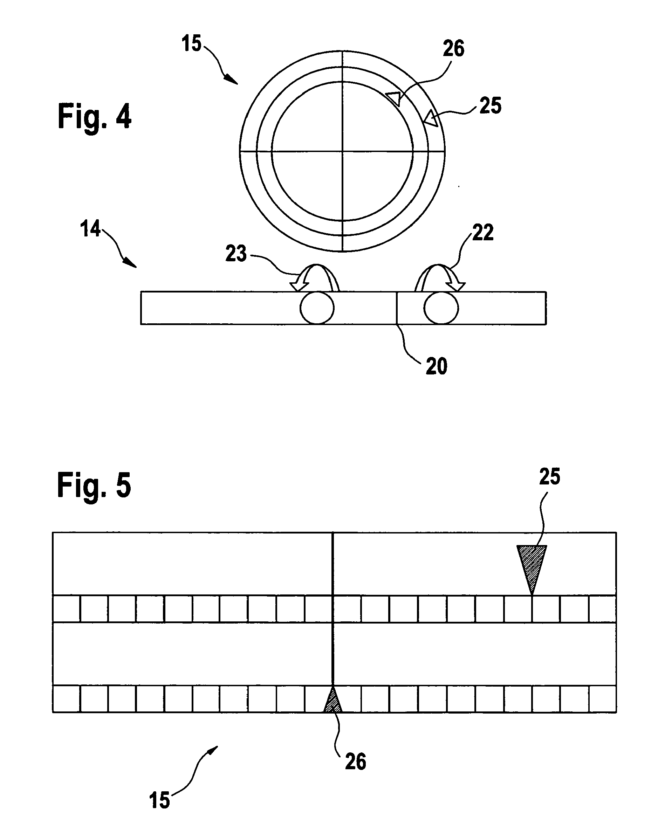

Figur 4 zeigt eine Ausführungsform einer Anzeigeeinrichtung 13, bei der der Soll-Lenkwinkelzeiger 25 und der Ist-Lenkwinkelzeiger 26 nicht von der Drehachse ausgehende Pfeile, sondern lediglich als Pfeilspitzen bzw. zueinander zeigende Dreiecke ausgebildet sind, die sich auf konzentrischen Bahnen bewegen. Durch eine derartige Anzeige wird dem Fahrer ebenfalls die Einstellung gleicher Winkel intuitiv vermittelt. Hierbei kann die Verlaufsanzeige 14 als vollständiger Kreis, d. h. 360°-Kreisbogen, ausgebildet sein. Die Lenkwinkel-Verfolgungsanzeige 15 ist bei dieser Ausführungsform als horizontaler Balken ausgebildet, in der die Umlenkzeiger 22 und 23 als Punkte bzw. kleine Kreise eingezeichnet sind; die Richtung des erforderlichen Lenkeinschlags ist hierbei durch in die entsprechende Richtung zeigende Pfeile angedeutet. Der in horizontaler Richtung verlaufende Verlaufszeiger 20 kann als helle oder dunkle bzw. andersfarbige Säule angezeigt werden.

Bei der Ausführungsform der Figur 5 ist die Lenkwinkel-Verfolgungsanzeige 15 linear ausgebildet, wobei der Soll-Lenkwinkelzeiger 25 und der Ist-Lenkwinkelzeiger 26 z.B. als zueinander gerichtete Pfeile bzw. Dreiecke ausgebildet sind, die zueinander geführt werden müssen. Damit ist in der gezeigten Stellung der Ist-Lenkwinkelzeiger 26 durch einen Rechtseinschlag des Lenkrades zu dem Soll-Lenkwinkelzeiger 25 zu verstellen.

Die Anzeigen 14 und 15 der Ausführungsform der Figuren 3 bis 5 können wahlweise miteinander kombiniert werden. Bei allen Ausführungsformen kann der Fahrer die Grundstellung des Lenkrades, d.h. den Null-Winkel bzw. die Geradeausfahrt jeweils als symmetrische Mitte der Anzeige 15 erkennen und somit nach Beendigung des Einparkvorgangs die Räder wieder in Geradeausfahrt stellen.

## Patentansprüche

1. Verfahren zur Ausgabe von Fahrerinformationen für eine Einparkhilfe, bei dem aus gemessenen Abstandssignalen (S1) eine Zielposition (P2) eines Fahrzeuges (1) ermittelt wird,
eine Trajektorie (T) des Fahrzeugs (1) von einer Startposition (P1) zu der Zielposition (P2) ermittelt wird,
aus der ermittelten Trajektorie (T) Umlenkpunkte (U1, U2) zur Änderung eines Lenkwinkeleinschlags ermittelt werden,
während eines nachfolgenden, im Wesentlichen entlang der Trajektorie (T) verlaufenden Einparkvorganges aktuelle Abstandssignale (S1) und von einem Lenkwinkelsensor (10) des Fahrzeuges (1) ausgegebene aktuelle Lenkwinkelsignale (S2) ermittelt werden und in Abhängigkeit der Abstandssignale (S1) und der Lenkwinkelsignale (S2) eine aktuelle Position auf oder bei der Trajektorie (T) ermittelt wird,
auf einer Verlaufsanzeige (14) des Fahrzeugs (1) die aktuelle Position (Pi) durch einen Verlaufszeiger (20) und die ermittelten Umlenkpunkte (U1, U2) durch Umlenkzeiger (22, 23) angezeigt werden, **dadurch gekennzeichnet, daß**
aus der aktuellen Position (Pi) auf der Trajektorie (T) ein aktueller Soll-Lenkwinkel ermittelt und als Soll-Lenkwinkelzeiger (25) auf einer Lenkwinkel-Verfolgungsanzeige (15) angezeigt wird,
aus den aktuellen Lenkwinkelsignalen (S2) ein Ist-Lenkwinkel ermittelt und als Ist-Lenkwinkelzeiger (26) auf der Lenkwinkel-Verfolgungsanzeige (15) angezeigt wird,
wobei der Soll-Lenkwinkelzeiger (25) und der Ist-Lenkwinkelzeiger (26) auf der Lenkwinkel-Verfolgungsanzeige (15) unter gleicher Skalierung und Parametrisierung angezeigt werden.

2. Verfahren nach Anspruch 1, **dadurch gekennzeichnet, dass** der Soll-Lenkwinkelzeiger (25) und der Ist-Lenkwinkelzeiger (26) bei gleichen Lenkwinkeln übereinander gelegt sind.

3. Verfahren nach einem der vorherigen Ansprüche, **dadurch gekennzeichnet, dass** der Soll-Lenkwinkelzeiger (25) und der Ist-Lenkwinkelzeiger (26) in der Lenkwinkel-Verfolgungsanzeige (15) als um eine gemeinsame Drehachse rotierende Zeiger dargestellt werden.

4. Verfahren nach einem der vorherigen Ansprüche, **dadurch gekennzeichnet, dass** der Verlaufszeiger (20) auf der Verlaufsanzeige (14) zwischen der Startposition (P1) und der Zielposition (P2) auf einer einparametrigen, gradlinigen Bahn verläuft.

5. Verfahren nach Anspruch 4, **dadurch gekennzeichnet, dass** die Umlenkzeiger (22, 23) neben der gradlinigen Bahn des Verlaufszeigers (20) angeordnet sind.

6. Verfahren nach einem der vorherigen Ansprüche, **dadurch gekennzeichnet, dass** die Umlenkzeiger (22, 23) die Richtung der Lenkwinkeländerung in den Umlenkpunkten (U1, U2) anzeigen.

7. Verfahren nach einem der vorherigen Ansprüchen, **dadurch gekennzeichnet, dass** für einen Rückwärtseinparkvorgang in eine seitliche Parklücke (5) bei einer Vorbeifahrt des Fahrzeuges (1) an der Parklücke (5) die Parklücke (5) mit Abstandsmesssignalen (S1) vermessen wird,
nachfolgend aus den Abstandsmesssignalen (S1) die Trajektorie (T) mit genau zwei aufeinander folgenden, gegensinnigen Umlenkpunkten (U1, U2) ermittelt wird, und die Trajektorie (T) in einen ersten Trajektorienabschnitt (TA1) mit Geradeausfahrt, einen zweiten Trajektorienabschnitt (TA2) mit einem ersten Lenkwinkeleinschlag und einen nach dem zweiten Umlenkpunkt (U2) folgenden dritten Trajektorienabschnitte (TA3) mit einem zweiten Lenkwinkeleinschlag unterteilt wird.

8. Verfahren nach einem der vorherigen Ansprüche, **dadurch gekennzeichnet, dass** bei der Fahrt auf der Trajektorie (T) nach einem Umlenkpunkt (U1, U2) der Lenkwinkel des Soll-Lenkwinkelzeigers (25) kontinuierlich zu einem höheren Einschlagwinkel verstellt wird.

9. Verfahren nach einem der vorherigen Ansprüche, **dadurch gekennzeichnet, dass** auf der Lenkwinkel-Verfolgungsanzeige (15) eine neutrale Lenkwinkelstellung für eine Geradeausfahrt in einer unveränderten Stellung bleibt und der Soll-Lenkwinkelzeiger (25) und der Ist-Lenkwinkelzeiger (26) entsprechend den ermittelten Lenkwinkeleinschlägen verstellt werden.

## Claims

1. Method for outputting driver information for a parking aid, in which method
a target position (P2) of a vehicle (1) is determined from measured distance signals (S1)
a trajectory (T) of the vehicle (1) from a start position (P1) to the target position (P2) is determined,
deflection points (U1, U2) for changing a steering angle lock are determined from the determined trajectory (T),
during a subsequent parking process which runs substantially along the trajectory (T), up-to-date distance signals (S1) and up-to-date steering angle signals (S2) which are output by a steering angle sensor (10) of the vehicle (1) are determined, and an up-to-date position on or in the trajectory (T) is determined as a function of the distance signals (S1) and the steering angle signals (S2),
on a progress indicator (14) of the vehicle (1), the up-to-date position (Pi) is displayed by a progress pointer (20) and the determined deflection points (U1, U2) are displayed by deflection pointers (22, 23),
**characterized in that**
an up-to-date setpoint steering angle is determined from the up-to-date position (Pi) on the trajectory (T) and displayed as the setpoint steering angle pointer (25) on a steering angle tracking indicator (15),
an actual steering angle is determined from the up-to-date steering angle signals (S2) and displayed as an actual steering angle pointer (26) on the steering angle tracking indicator (15),
with the setpoint steering angle pointer (25) and the actual steering angle pointer (26) being displayed on the steering angle tracking indicator (15) with the same scaling and parameterization.

2. Method according to Claim 1, **characterized in that** the setpoint steering angle pointer (25) and the actual steering angle pointer (26) are positioned one above the other when the steering angles are identical.

3. Method according to either of the preceding claims, **characterized in that** the setpoint steering angle pointer (25) and the actual steering angle pointer (26) in the steering angle tracking indicator (15) are illustrated as pointers which rotate about a common rotation axis.

4. Method according to one of the preceding claims, **characterized in that** the progress pointer (20) on the progress indicator (14) runs on a single-parameter, linear track between the start position (P1) and the target position (P2).

5. Method according to Claim 4, **characterized in that** the deflection pointers (22, 23) are arranged next to the linear track of the progress pointer (20).

6. Method according to one of the preceding claims, **characterized in that** the deflection pointers (22, 23) display the direction of the steering angle change at the deflection points (U1, U2).

7. Method according to one of the preceding claims, **characterized in that**, for a reverse parking process into a parking space (5) which is on the side, the parking space (5) is measured by distance measurement signals (S1) as the vehicle (1) drives past the parking space (5),
the trajectory (T) with exactly two successive deflection points (U1, U2) having opposite directions is subsequently determined from the distance measurement signals (S1), and
the trajectory (T) is divided into a first trajectory section (TA1) with straight drive-off, a second trajectory section (TA2) with a first steering angle lock, and a third trajectory section (TA3), which follows the second deflection point (U2), with a second steering angle lock.

8. Method according to one of the preceding claims, **characterized in that** the steering angle of the setpoint steering angle pointer (25) is continuously adjusted to a higher lock angle during driving on the trajectory (T) after a deflection point (U1, U2).

9. Method according to one of the preceding claims, **characterized in that**, on the steering angle tracking indicator (15), a neutral steering angle position for straight drive off remains in an unchanged position, and the setpoint steering angle pointer (25) and the actual steering angle pointer (26) are adjusted in accordance with the determined steering angle locks.

## Revendications

1. Procédé de fourniture d'informations à un conducteur pour l'assister pendant les manoeuvres de stationnement, dans lequel
la position visée (P2) du véhicule (1) est déterminée à partir de la mesure de signaux de distance (S1) ,
une trajectoire (T) du véhicule (1) entre une position initiale (P1) et la position visée (P2) est déterminée,
des points (U1, U2) de changement de trajectoire (T) sont déterminés pour modifier l'action sur l'angle de direction,
pendant la manoeuvre de stationnement qui suit et qui se déroule essentiellement le long de la trajectoire (T), des signaux instantanés de distance (S1) et des signaux instantanés d'angle de direction (S2) délivrés par un détecteur (10) d'angle de direction du véhicule (1) sont déterminés et la position instantanée sur ou dans la trajectoire (T) sont déterminés en fonction des signaux de distance (S1) et des signaux d'angle de direction (S2),
sur un affichage de trajectoire (14) du véhicule (1), la position (Pi) est affichée par un pointeur (20) de déroulement de trajectoire et les points de changement de trajectoire (U1, U2) déterminés sont affichée sous la forme de pointeurs (22, 23) de changement de trajectoire,
**caractérisé en ce que**
à partir de la position instantanée (Pi) sur la trajectoire (T), un angle instantané de direction de consigne est déterminé et est affiché sous la forme d'un pointeur (25) d'angle de direction de consigne sur un affichage (15) de suivi de l'angle de direction,
à partir des signaux instantanés d'angle de direction (S2), un angle effectif de direction est déterminé et est affiché sous la forme d'un pointeur (26) d'angle de direction effectif sur l'affichage (15) de suivi d'angle de direction, le pointeur (25) d'angle de direction de consigne et le pointeur (26) d'angle de direction effectif étant affichés sur l'affichage (15) de suivi d'angle de direction à la même échelle et avec la même paramétrisation.

2. Procédé selon la revendication 1, **caractérisé en ce que** le pointeur (25) d'angle de direction de consigne et le pointeur (26) d'angle de direction effectif sont superposés lorsque ces angles de direction sont identiques.

3. Procédé selon l'une des revendications précédentes, **caractérisé en ce que** le pointeur (25) d'angle de direction de consigne et le pointeur (26) d'angle de direction effectif sont représentés sur l'affichage (15) de suivi d'angle de direction sous la forme de pointeurs qui tournent autour d'un axe de rotation commun.

4. Procédé selon l'une des revendications précédentes, **caractérisé en ce que** le pointeur (20) de déroulement de trajectoire présenté sur l'affichage de déroulement (14) s'étend entre la position initiale (P1) et la position visée (P2) sur un parcours rectiligne à un paramètre.

5. Procédé selon la revendication 4, **caractérisé en ce que** les pointeurs (22, 23) de changement de direction sont disposés à côté du parcours rectiligne du pointeur (20) de déroulement de trajectoire.

6. Procédé selon l'une des revendications précédentes, **caractérisé en ce que** les pointeurs (22, 23) de changement de direction affichent la direction de la modification de l'angle de direction aux points (U1, U2) de changement de direction.

7. Procédé selon l'une des revendications précédentes, **caractérisé en ce que** pour une manoeuvre de stationnement en marche arrière vers un emplacement libre de stationnement (5) situé latéralement, l'emplacement libre de stationnement (5) est mesuré au moyen de signaux de mesure de distance (S1) pendant que le véhicule (1) passe le long de l'emplacement libre de stationnement (5),
ensuite, une trajectoire (T) qui présente exactement deux points successifs (U1, U2) de changements de direction dans des sens opposés est déterminée à partir des signaux de mesure de distance (S1), la trajectoire (T) étant divisée en une première portion de trajectoire (TA1) de déplacement rectiligne, une deuxième portion de trajectoire (TA2) avec une première action sur l'angle de direction et une troisième portion de trajectoire (TA3) qui suit le deuxième point (U2) de changement de direction qui présente une deuxième action sur l'angle de direction.

8. Procédé selon l'une des revendications précédentes, **caractérisé en ce que** lors du parcours de la trajectoire (T) qui suit un point (U1, U2) de changement de direction, l'angle de direction du pointeur (25) d'angle de direction de consigne est ajusté en continu vers un plus grand angle d'action.

9. Procédé selon l'une des revendications précédentes, **caractérisé en ce qu'**une position neutre d'angle de direction pour un déplacement en ligne droite reste en position inchangée sur l'affichage (15) de suivi d'angle de direction et **en ce que** les actions déterminées à exercer sur l'angle de direction sont modifiées en fonction du pointeur (25) d'angle de direction de consigne et du pointeur (26) d'angle de direction effectif.
